Europäisches Patentamt

European Patent Office

Office européen des brevets

(19)

(11) Publication number: **0 126 571**
A2

(12) ·EUROPEAN PATENT APPLICATION

(21) Application number: **84302982.8**

(51) Int. Cl.³: **C 09 K 5/00, F 28 D 15/00**

(22) Date of filing: **03.05.84**

(30) Priority: **06.05.83 JP 68318/83**
**14.07.83 JP 109502/83**
**22.07.83 JP 134671/83**
**17.09.83 JP 171662/83**
**19.09.83 JP 144634/83**

(43) Date of publication of application: **28.11.84**
**Bulletin 84/48**

(84) Designated Contracting States: **AT BE CH DE FR GB IT LI LU NL SE**

(71) Applicant: **Miyagawa, Takashi, 498, Ooaza Kootaka, Suzaka-shi Nagano-ken (JP)**

(72) Inventor: **Miyagawa, Takashi, 498, Ooaza Kootaka, Suzaka-shi Nagano-ken (JP)**

(74) Representative: **Calderbank, Thomas Roger et al, MEWBURN ELLIS & CO. 2/3 Cursitor Street, London EC4A 1BQ (GB)**

(54) Heat exchanger.

(57) A heat exchanger has a heater (4, 5) for heating a heat carrying liquid (1). The heated liquid (1) is pumped by pump (3) through a pipe (2) to a heat exchange section (6), where the liquid (1) is brought into contact with a fluid to be heated by heat exchange with the liquid. The liquid (1) has a higher boiling point, a lower melting point, and a smaller specific heat than water. Such a liquid has the advantages that the loss of the liquid due to vaporizatiton is suppressed because of its high boiling point, that the liquid is unlikely to freeze because of its low melting point, and that the temperature rise of the exchanger is rapid and the heat exchange efficiency of exchanger is excellent because of the small specific heat of the liquid (1). The heat exchanger is particularly suitable for heating systems.

EP 0 126 571 A2

Heat exchanger

The present invention relates to a heat exchanger.

Conventionally, water is used as the heat carrying medium for heat exchange because it has a large specific heat so as to be excellent in heat-storing capacity.

However, the heat exchanger using water as the heat carrying medium has disadvantages in that the temperature rise is too slow for handy use, that too large a quantity of heat is required for heating the heat carrying liquid, and that the heat exchange efficiency is too low.

For water as the heat carrying medium, a heat source with high thermal output is required to accelerate the temperature rise. To meet this requirement, as the heat source, use has generally been made of gas or kerosene which, though inexpensive, has a possibility to cause fires or explosions, is hard to be put under continuous temperature control, and makes the resulting system large-scaled. Electrical energy, which is safe to use and allows continuous temperature control, has been used only in limited cases because of its inferior economy.

For a heat exchanger using a low-boiling heat carrying liquid such as water, when the circulation duct, etc. filled with the heat carrying liquid are opened to atmosphere, the heat carrying liquid is lost due to vaporization and its charged quantity requires continual check and supplement, making the system operation tedious; on the other hand, when the circulation duct, etc. are closed, a pressureproof structure needs to be applied, making the system expensive.

Furthermore, the high melting point of water necessitates a provision for preezing prevention and the oxygen dissolved in water necessitates a provision for corrosion prevention.

The object of the present invention is to offer a heat exchanger which is characterized in that the temperature rise of heat carrying liquid is rapid even with a heat source of small output, that manageability is still high even for short-term use, that the heat exchange efficiency is so high as to be economic, that the circulation duct, etc. filled with the heat carrying liquid may be kept open to atmosphere, making pressureproof structure unnecessary to be adopted, and that the heat carrying liquid is hard to freeze and contains no corrosive matters, increasing the system durability.

The above object has been effected by using as the heat carrying liquid such a liquid as ethylene glycol which has a higher boiling point, a lower melting point, and a smaller specific heat than water.

In the drawings:

Fig. 1 is a figure illustrative of the principle for a floor heating system;

Figs. 2 and 3 are figures illustrative of the arrangement of radiation sections for a floor heating system;

Fig. 4 is a figure illustrative of a circulation duct section for a heating system;

Fig. 5 illustrates a control circuit for a heating system;

Fig. 6 is a figure illustrative of the principle for a heater fan;

Fig. 7 is a sectional view illustrative of the internal structure of a heat exchanger for hot-water supply;

Figs. 8 and 9 are figures illustrative of the principle for a heat exchanger using solar heat as heat source;

Figs. 10. 11, and 12 illustrate a heat exchanger with a dual structure;

Fig. 13 is a lateral sectional view of an inductive heating device; and Fig. 14 is a vertical sectional view of an inductive heating device.

As a heat carrying liquid 1, use is made of such a liquid as has a higher boiling point, a lower melting point, and a smaller specific heat than water.

Liquids which may be used as the heat carrying liquid 1 should be such non-volatile, slightly viscous liquids as ethylene glycol, tri(ethylene glycol), poly(ethylene glycol), propylene glycol, poly(propylene glycol), di(ethylene glycol), hexylene glycol, and silicone oil. The following table lists physical properties for the liquids of wide use.

| | Molecular weight | Boiling point °C | Melting point °C | Specific heat $cal \cdot g^{-1} \cdot deg^{-1}$ at 20°C | Specific weight at 20°C |
|---|---|---|---|---|---|
| Ethylene glycol | 62.07 | 197.6 | -13.0 | 0.56 | 1.1155 |
| Tri(ethylene glycol) | 150.17 | 287.4 | -7.2 | 0.53 | 1.1254 |
| Poly(ethylene glycol) | 202 | 185 | -50 | 0.5 | 1.126 |
| Propylene glycol | 76.09 | 187.3 | -60 | 0.593 | 1.0381 |
| Poly(propylene glycol) | 400 | | -45 | 0.476 | 1.007 |
| Silicone oil | 6000 | 250 | -50 | 0.33 | 0.97 |

The heat exchanger of the present invention comprises a circulation duct section which includes a heat exchange section and a heating section and is filled with the heat carrying liquid 1. Description will first be made of an example application of the heat exchanger of the present invention for use as a heating system.

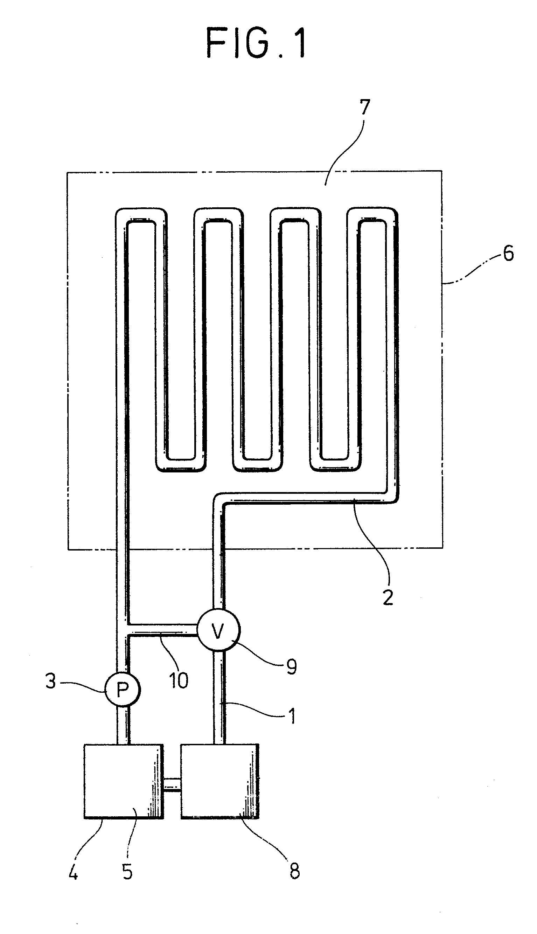

Referring to Fig. 1, the heat carrying liquid 1 is allowed to circulate through a circulation duct section 2 by a pump, and is heated at a heating section 4 provided with an electric heater 5 inside.

The circulation duct section 2 is multiply bent, so as to be increased in its radiation area, in a heat exchange section 6, where the circulation duct section 2 is in contact with a metallic radiation plate 7.

When it is desirable for the heat carrying liquid 1 to have a heat storing effect, the total heat storing capacity is to be increased by providing the circulation duct section 2 with a reservoir tank 8, thus allowing a long-term heat radiation. A three-way valve 9 and a shortcut path 10 are provided to keep the heat carrying liquid 1 from passing into the heat exchange section 6. This provision of the three-way valve 9 and the shortcut path 10 is useful because a dump radiation from the heat exchange section 6 is possible if we heat previously the heat carrying liquid 1 inside the revervoir tank 8 to a high temperature by applying the three-way valve 9 and the shortcut path 10 so as to keep the heat carrying liquid 1 from circulating through the heat exchange section 6 and if we then open the three-way valve 9 to let the previously-heated heat carrying liquid 1 all at once into the heat exchange section 6.

Floor heating using the present system is effected by laying the heat exchange section 6 over the floor inside a room. For this application it is advisable to use plural heat exchange sections 6 from a standpoint of the manufacture and floor application of heat exchange sections 6 and of the establishment of the desirable inside temperature distribution.

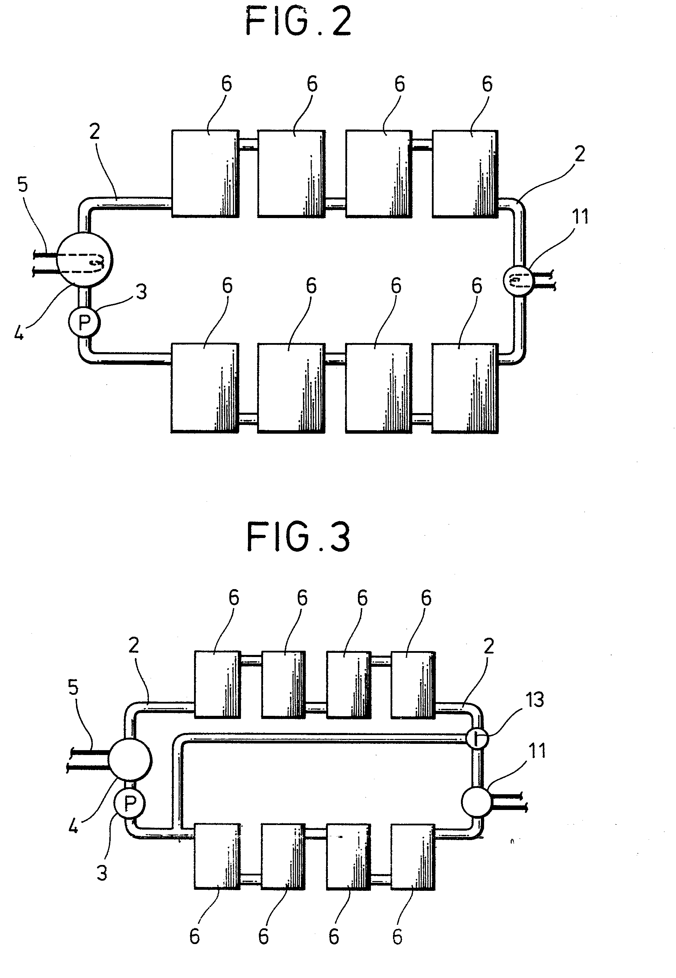

An example of actual application is illustrated in Fig. 2, where plural heat exchange sections 6 are connected in series and then connected to the heating section 4. With this connection, the pump 3 forces the heat carrying liquid 1 to pass in sequence through each of the heat exchange sections 6 giving off its heat. The piping work for the heat exchange sections 6 is very easy since the heat exchange sections 6 are to be connected in series.

An auxiliary heating section 11 is inserted in series in the circulation duct section 2 on the inlet side of a desirable set of heat exchange sections 6 in order to establish the prescribed inside temperature distribution.

With this structure, the heat carrying liquid 1 of small specific heat may get heated up by the auxiliary heating section 11 with such a rapidly-rising temperature that the amount of radiation at the desirable heat exchange sections 6 may be increased in a short period of time.

It is advisable to provide a shortcut path 12 and a switchover valve 13, as shown in Fig. 3, so that the heat carrying liquid 1 may be kept as needed from passing through some selected heat exchange sections 6. At the beginning of heating we can put all the heat exchange sections 6 into operation, and after the room temperature has reached the desired level, we can apply the shortcut path 12 to put selected heat exchange sections 6 out.of operation. Thus, the structure with the shortcut and switchover valve is handy since it is capable of raising the room temperature to the desired level in a short period, and it may contribute much to reducing the cost of fuel.

When, with the system out of operation, depression of the ambient temperature has resulted in increase in the viscosity of heat carrying liquid 1, we are often troubled by breakage of the pump 3 at its start, and breakage of the thermal fuse which is put into operation when the heat carrying liquid 1 has got overheated.

To prevent these troubles, it is desirable to have the heat carrying liquid being heated by a preheater and circulating within the circulation duct section.

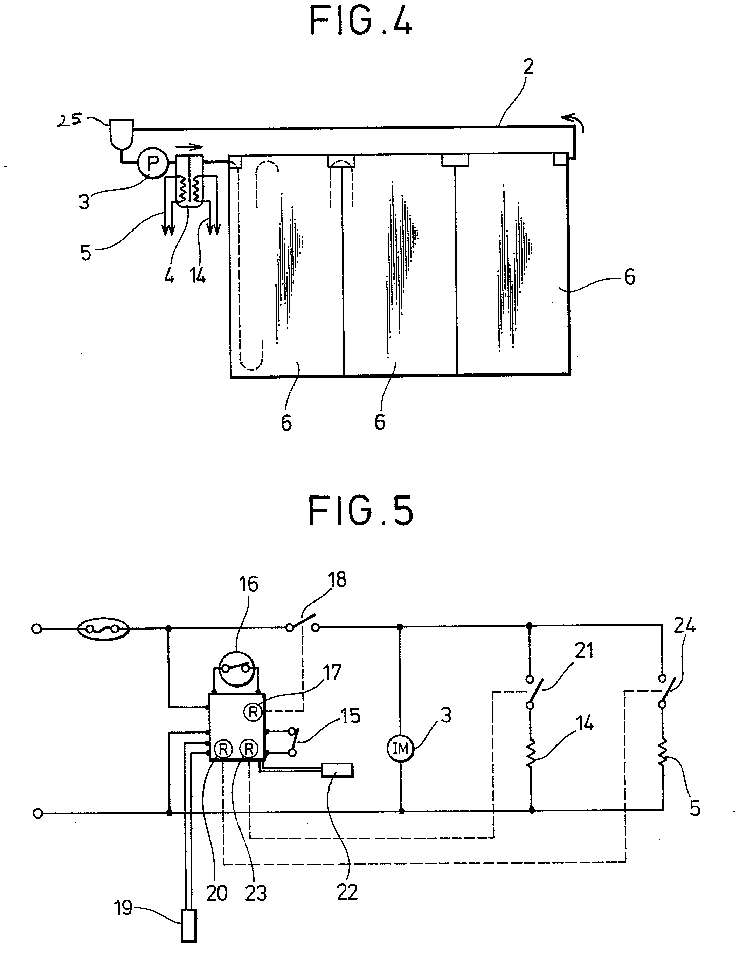

Along the above idea, as shown in Fig. 4, the heating section 4 is provided with a preheater 14 together with the electric heater 5.

The control circuit for the preheater 14, electric heater 4, and pump 3 is illustrated in Fig. 5. While the heating system is not in use, i.e., while the switch 15 is turned off, turning on a power supply switch 16 will drive a relay 17 to turn ON a contact 18, which in turn drives the pump 3 to move the heat carrying liquid within the circulation duct section.

On the other hand, when the temperature of heat carrying liquid 1, as detected by a liquid-temperature sensor 19, has lowered below 10°C, the relay is put into operation to turn ON a contact 21, which in turn activates the preheater 14 to heat the heat carrying liquid 1.

Thus, the preheater 14 is subject to on-off control to keep the heat carrying liquid 1 at 10-15°C.

When the system is to be used for heating a room, we turn on a switch 15. With this switch ON, the relay is kept in operation with a contact 24 ON until the room temperature as detected by a room-temperature sensor 22 has reached the prescribed value, during which period the electric heater 15 is kept activated with the heat carrying liquid being heated.

For preheating purpose, the electric heater 5 may be used also as the preheater 14 or the auxiliary heater 11, shown in Fig. 2, may be used for preheating.

An expansion chamber 25, as shown in Fig. 4, is connected to the circulation duct section 2. In case this expansion chamber 25 is opened to atmosphere, the circulation duct section 2 need not be of pressureproof structure. Even with an open expansion chamber, the heat carrying liquid 1 has such a high boiling point that its quantity will not be caused to decrease significantly due to vaporization. The heat carrying liquid has a higher viscosity than water and thus, even when the expansion chamber 25, opened to atmosphere, is set at a level lower than that of the heat exchange section 6, none of the heat carrying liquid 1 will flow out of

0126571

the expansion chamber 25. The expansion chamber 25, the heating section 4, or the pump 3 may be made conveniently out of the way by being disposed beneath the floor.

Description will now be made of an application of the present invention to a heater fan.

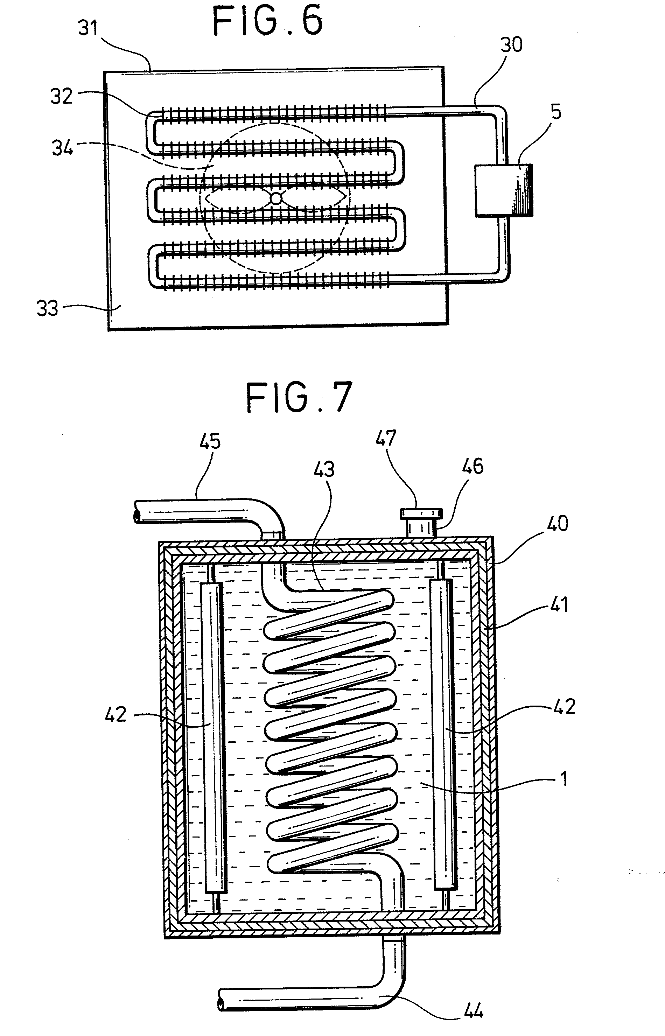

Referring to Fig. 6, a heat carrying liquid 1 is filled in a circulation duct section 30.

A frame 31 is opened forward and backward so that air flow may be allowed. The circulation duct section 30 is drawn out of the frame 31 through the side wall of the frame 31. The heat carrying liquid 1 is heated outside the frame by an electric heater 5 and allowed to radiate heat at a heat exchange section 33 where the duct 30 inside the frame 31 is multiply bent and provided over its outer surface with fins 32 for increasing the radiation area.

A fan 34 sends air vertically to the plane inclusing the heat exchange section 33; the air flow is heated while passing through the heat exchange section 33, being blown out in hot air..

With this heater fan, heating of the heat carrying liquid 1 for a long period with the electric heater 5 set at a low output rate results in storage at a high temperature of the heat of electric heater 5 because of the small specific heat and high boiling point of the heat carrying liquid 1, and thus, when in use as a heating system, it continues to radiate heat to warm the room to some extent during the long-term low-output heating, and as soon as the fan 34 begins to operate, hot air at a high temperature immediately gets blown out to warm the room rapidly and the heat carrying liquid 1 keeps heat radiation for a long period.

Description will now be made of another example of heat exchanger which is designed in such a way that the heat carrying liquid 1 does

0126571

not circulate, whereas the partner liquid for heat exchange flows.

Referring to Fig. 7, a heat exchanger proper 40, in a form of box, is formed on a triple-walled structure with a heat insulator 41 sandwiched.

The proper 40 is filled with a heat carrying liquid 1 and has a pair of electric heaters 42 in a form of panel fixed as a heating source for heating the heat carrying liquid 1.

In the middle of the proper 40 there is provided a flow pipe 43, serving as a liquid flow path, which is in a form of spiral so as to have a large contact area. The flow pipe 43 penetrates the proper 40 liquid-tight and its lower and upper ends are connected with a water supply pipe and a hot-water supply pipe, respectively. The water supply pipe 44 supplies water from a water supply source not shown in the figure and the water supplied is subject to heat exchange with the heat carrying liquid 1 during passage through the flow pipe 43, flowing out into the hot-water supply pipe 45. In this example application, water is subject to heat exchange with the heat carrying liquid 1. The hot-water supply pipe 45 is connected to a hot-water outlet provided in a bathtub or kitchen and thus, the water flowing through the hot-water supply pipe 45 after heat exchange is to be supplied to the above-mentioned hot-water outlet. A supply opening 46, capable of open and close, is for supplying the heat carrying liquid 1 into the proper 40; it is kept closed with a cap 47 except during the time of supply.

With such a structure, each electric heater 42 is turned on to heat the heat carrying liquid 1 and when the heat carrying liquid 1 has reached a prescribed temperature, water is supplied from the water supply pipe 44 to the flow pipe 43; the water is heated up to a high temperature through heat exchange undergone with the hot heat carrying liquid 1 during passage through the flow pipe, being supplied from the hot-water supply pipe 45 to the hot-water outlet in hot water. For this process, the heating of the heat carrying liquid 1 proceeds with high efficiency since each electric heater 42 is completely enveloped with the heat carrying liquid 1.

The heat carrying liquid 1 may be kept in a state of heat accumulation at a sufficiently high temperature by being continuously heated with an electric heater 42 of small capacity; passage of water through the flow pipe with the heat carrying liquid 1 thus arranged will supply us with heated steam.

The heat carrying liquid 1 is usually not decreased in its charged quantity since it is non-volatile and is kept in a closed system; however, in case of occurrence of a decrease, a simple supply through the supply opening 46 into the proper 40 will do. The means for heating the heat carrying liquid 1 is not restricted to the electric heater 42 but various modifications are available depending on the usage. Prevention of the heat carrying liquid 1 from decreasing in charged quantity may more efficiently be effected by covering the heat carrying liquid 1 with a liquid having a small specific weight and a roughly equal boiling point.

Description will now be made of a heat exchanger utilizing economically favorable solar heat as heat source.

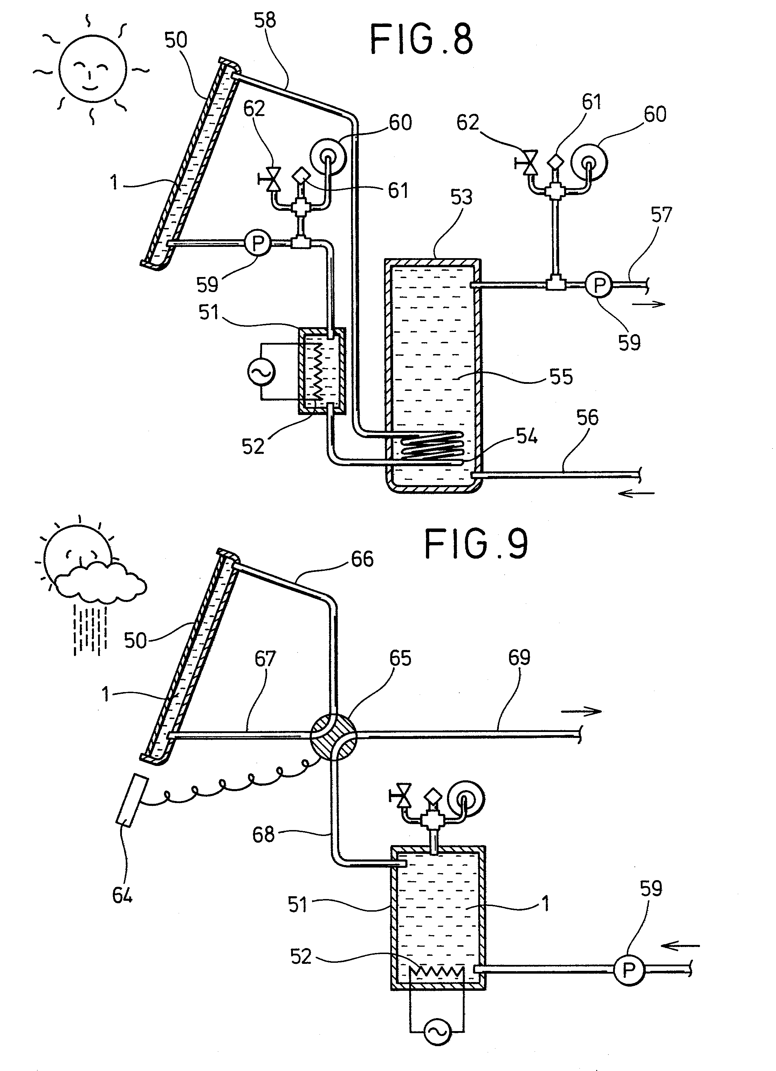

Referring to Fig. 8, a solar-heat collecting section 50 has a wide light-receiving face and such an internal volume as can holds the minimum required quantity of heat carrying liquid 1.

An electric heater section 51 consists of a thermally-insulated box and an electric heater 52 provided in the box.

An heat storing section 53 consists of a thermally-insulated box and a heating coil 54 provided at the bottom of the box. A supply pipe 56 for supplying a heat storing medium 55 penetrates the lower wall section of the box and a discharge pipe 57 for discharging the heat storing medium 55 penetrates the upper wall section of the box. As the heat storing medium 55, water is used for hot-water supplying purpose and, on the other hand, water, ethylene glycol, or else may suitably be used for heating purpose according to the usage.

The heat carrying liquid 1 is filled in a circulation duct 58 of adiabatic structure so that it may circulate through the solar-heat collecting section 50, the heating coil 54, and the electric heater section 51. Pumps 59 are each provided on the circulation duct 58 and the discharge pipe 57 to drive the heat carrying liquid 1 and the heat storing medium 55, respectively.

Each of the circulation duct 58 and the discharge pipe 57 is provided with an expansion tank 60, a gas release valve 61, and a safety valve 62.

The heat carrying liquid 1, heated by either solar heat or electric heat, circulates through the heating coil 54 and the solar heat, etc. is stored in the heat storing medium 55 at the heat storing section 53.

In the absence of solar-heat supply at night, in cloudy daytime, etc., the heat carrying liquid 1 heated by the electric heater section 52 might radiate its heat once stored at the solar-heat collecting section 50. A device for preventing this unfavorable radiation will be described in reference to Fig. 9. A 4-way switchover valve 65 is provided on the circulation duct 58; switching over this valve 65 to one direction may form the circulation flow path of the heat carrying liquid 1, i.e., the flow path through the electric heater section 51, the solar-heat collecting section 50, and the heating coil 54; on the other hand, switching over the valve 65 to the other direction may connect pipes 66 and 67 extending, respectively, from the upper and lower sections of the solar-heat collecting section 50 and, at the same time, connect pipes 68 and 69 extending, respectively, from the upper section and heating-coil side of the electric heater section 51, thus preventing the radiation from the solar-heat collecting section 50.

A light sensor 64, for checking the presence and absence of sunlight, is provided near the solar-heat collecting section 50. In the absence of sunlight, for example, at night, the light sensor 64 will drive the 4-way switchover valve 65 so that there will be formed a direct connection between the electric heater section 51 and the heating coil 54. The light sensor 64 may be replaced by a thermal sensor; in this case of replacement, another thermal sensor is employed to measure the temperature of the heat carrying liquid 1 at the heating coil 54 or within the electric heater section 51 and the temperature difference between the two thermal sensors is designed to allow the 4-way switchover valve 65 to be driven.

The structure described above allows the heat carrying liquid 1 to circulate through the solar-heat collecting section 50 while the sun is shining, i.e., solar heat is ready to be utilized. The heat carrying liquid 1 can approach the maximum temperature available for the sun actually shining very soon after the beginning of circulation since the heat carrying liquid 1 has a small specific heat and the volume inside the solar-heat collecting section 50 is small. The heat carrying liquid 1 thus heated to a high temperature is forced by the pump 59 toward the heating coil 54. The heat storing medium 55 may be heated rapidly to a high temperature since the heat carrying liquid 1 is at a high temperature, has a small specific heat, and radiates heat in large quantity at the heat storing section 53.

At night or in cloudy or rainy daytime when no solar heat may be utilized, the 4-way switchover valve 65 is to be changed over to the other direction to have a direct connection between the electric heater section 51 and the heating coil 54, thereby preventing heat radiation from the solar-heat collecting section 50 and at the same time the electric heater is to be put into operation to supplement the shortage of the heat storage by solar heat.

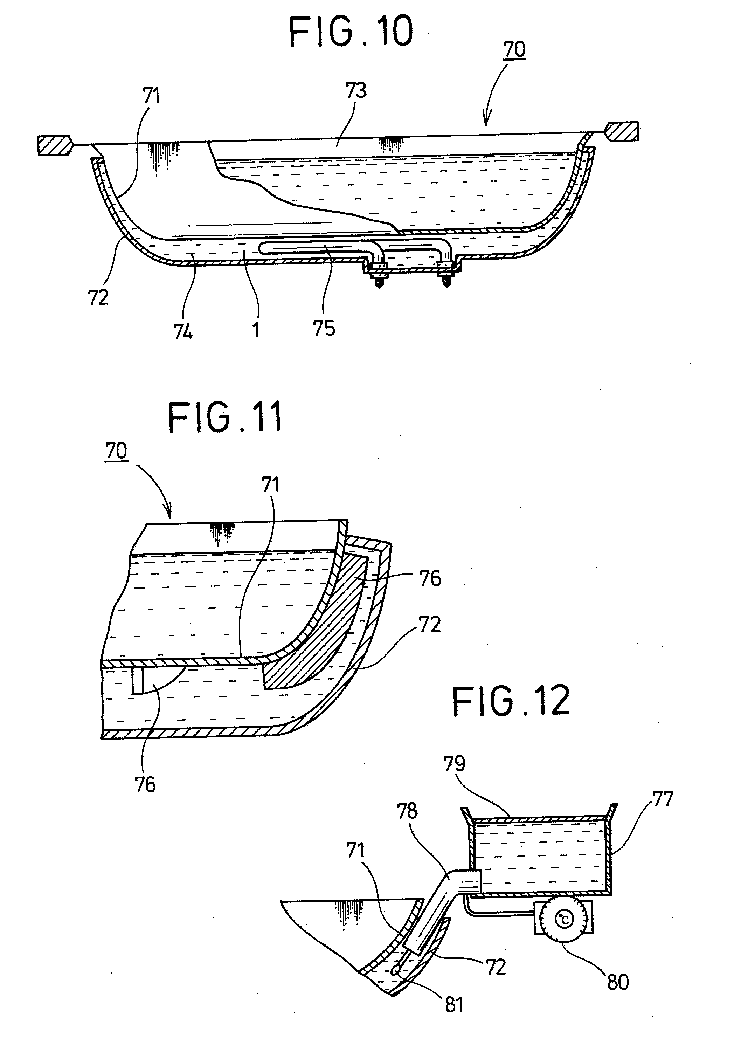

Description will now be made of a heat exchanger, shown in Fig. 10, which corresponds to a dual-structured vessel with the heat carrying liquid 1 contained in its enclosed space and which is used to heat a material in the vessel. The example heat exchanger of Fig. 10 is used for a frying pan.

Referring to Fig. 10, a frying pan 70 is prepared by fusing together an upper pan 71 and a lower pan 72 large enough to cover the outer surface of the upper pan 71 in such a way that the upper edge of the lower pan 72 is connected close to the upper edge of the upper pan 71, thereby forming a processing section 73 and a dual-structured enclosed section 74.

An electric heater 75 is provided within the enclosed section 74 on the bottom of the pan 70. When a burner is used as heat source, the bottom face is to be heated.

Frying oil is put into the processing section 73 and the enclosed section 74 is filled with a heat carrying liquid 1 with such a boiling point as matches the temperature at which the processing section works for heating the material to be processed.

Fins 76, as shown in Fig. 11, are attached on the outer wall of the upper pan 71 out of contact with the lower pan 72. They serve to make uniform the convection of the heat carrying liquid 1 as well as to convey heat to the upper pan 71.

Fig. 12 enlarges the fused section between the upper pan 71 and the lower pan 72. Referring to Fig. 12, an expansion chamber 77 communicates to the enclosed section via a pipe 78 penetrating the fused section so that the heat carrying liquid 1, when caused to expand by heating, may flow into the expansion chamber 77. The cover of the expansion chamber 77 has pinholes 79 bored to keep the inside of the expansion chamber 77 at atmospheric pressure.

A temperature controller 80, for controlling the temperature of the frying oil, puts the electric heater 75 under on-off control in conjunction with a temperature sensor 81 which is provided at a suitable position within the enclosed section 74 and serves to detect the temperature of the heat carrying liquid 1.

In using the frying pan 70 with the above structure, the temperature controller 80 is first set at a prescribed temperature and then the electric heater 75 is turned on. The heat carrying liquid 1 will be heated up to the temperature set by the temperature controller 80 without boiling since it has a high boiling point; the temperature rise will be completed in a short period since the heat carrying liquid 1 has a small specific heat.

The heating of frying oil in the processing section 73 is performed efficiently since the heat carrying liquid 1, while being heated, on one hand, goes upward from the bottom face of the upper pan 71 along the surrounding face, and on the other hand, moves within the enclosed section 74 in convection, thus resulting in the frying oil being heated from the surrounding face via the upper pan 71 as well as from the bottom face.

In heating frying oil, the heat contained in the heat carrying liquid 1 is easy to go to the frying oil since the fins 76 not only serve to make the convection of the heat carrying liquid 1 smooth but also are set in contact only with the upper pan 71.

For the above reson, when the temperature of the heat carrying liquid 1 has reached the temperature set by the temperature controller 80, the temperature of the frying oil has become roughly equal to their temperatures.

When materials for frying are put into the frying oil, the oil temperature is caused to lower temporarily; however, this lowering occurs for an extremely short period and to a very slight degree since the heat stored in the heat carrying liquid 1 is supplied to the upper pan 71 from its entire face.

The example application described above has applied the heat exchanger to a frying pan. It is of course applicable to a cooking pot, a boiling pan, a kettle, etc. In any applications, the heating in the processing section is rapid, efficient, and uniform since the convection of the heat carrying liquid is effective for heating from overall faces.

As to the electric heaters used in the example applications described above, in addition to the heating source composed of nichrom wire, use may be made of a heating source composed of semiconductor resistance element (PTC heater) and a heating source based on inductive heating.

The PTC heater, whose resistance increases with rising temperature, allows a large current to be applied at the start of heating with resultant rapid temperature rise; it is generally easy and safe to use. The heating source based on inductive heating, unlike the heating source made of nichrom wire, is free of wire breakage, has a long service life, and requires only easy maintenance.

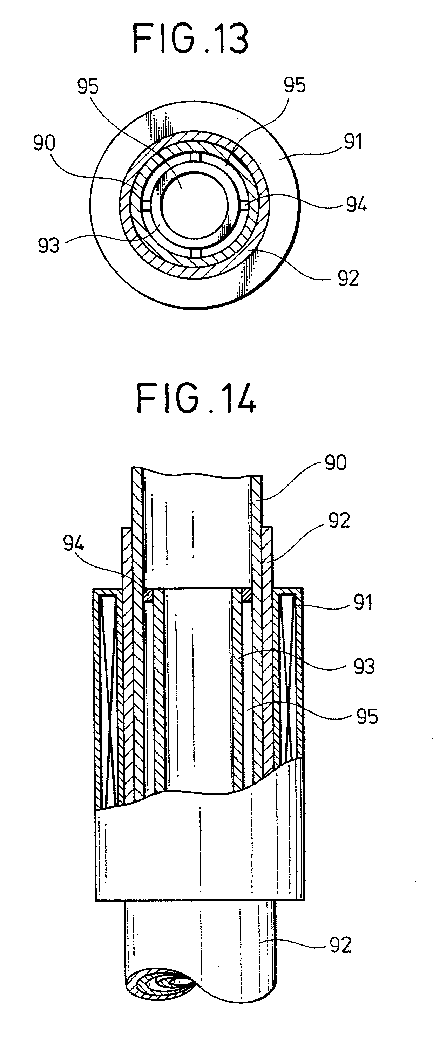

An example application utilizing such inductive heating for heating a heat carrying liquid within a circulation duct is shown in Figs. 13 and 14 and will be described briefly.

A heat carrying liquid 1 flows within a circulation duct 90.

A coil 91 connected to an AC power supply is wound on the outer wall of the circulation duct 90 via a heat insulating material 92.

A heat source 93, made of aluminium, iron, copper, etc. in a cylindrical form, is fixed on the inner wall of the circulation duct 90 via a spacer 94.

Upon a supply of AC into the coil 91, eddy current is produced on the heat source 93, which in turn radiates heat; when the circulation duct 90 is made of a conductive material, the circulation duct 90 is caused to radiate heat, heating the heat carrying liquid 1 during its passage through a gap 95.

For a heat exchanger where a heat carrying liquid 1 is filled in a box and allows only natural convection, such a structure is adopted as corresponds to the above-described circulation duct 90 cut in such a way as to have upper and lower openings.

As has been described in detail, according to the present invention, such a liquid as has a higher boiling point, a lower melting point, and a smaller specific heat than water is employed as the heat carrying liquid. For this reason, as compared with a system using water in the same quantity and a heating source of the same output, the present system allows rapid temperature rise of the heat carrying liquid, resulting in rapid temperature rise of the partner liquid for heat exchange; the present system is thus easy to use and is excellent in heat exchange efficiency especially when applied to a short-term use. When the heat carrying liquid is to be heated above 100°C, no heat is lost due to vaporization because of high boiling point, and accordingly, the heat carrying liquid may be heated to a desired high temperature even by using a heat source of extremely small output as compared with the case using water as the heat carrying liquid, and no pressureproof structure is required; thus, the heat exchanger of the present invention is inexpensive with respect to manufacture and economical with respect to use.

In addition, the present invention furnishes various advantages such as that no freezing occurs because of low melting point, and that corrosion hardly occurs and the system durability is excellent because of no content of free oxygen.

-18-

CLAIMS

1.      A heat exchanger for performing heat exchange by bringing two fluids of different temperatures into indirect contact with each other, the exchanger comprising a heat carrying liquid (1) as at least one of the two fluids, means (4,5) for heating the heat carrying liquid, and a heat exchange section (6) at which the heat carrying liquid (1) comes into indirect contact with the other fluid;

characterised in that:

the heat carrying liquid (1) has a higher boiling point, a lower melting point, and a smaller specific heat than water.

2.      A heat exchanger according to claim 1 wherein the heat carrying liquid (1) is one of ethylene glycol, tri(ethylene glycol), poly(ethylene glycol), propylene glycol, poly(propylene glycol), di(ethylene glycol), and hexylene glycol or a mixture composed of some of these glycols.

3.      A heat exchanger according to claim 1 or claim 2 wherein the heating means (4,5) has a heater (5) and the heating means (4,5) and the heat exchange section (6) are connected via a circulation duct (2) filled with the heat carrying liquid (1).

4. A heat exchanger according to any one of the preceding claims wherein the heat exchange section (6) is a set of radiators disposed over the room to be heated and the heat carrying liquid (1) is forced to circulate within the or a circulation duct (2) connecting together the heat exchange section (6), the heating means (4,5), an expansion chamber (25) equipped with a hole communicating to atmosphere, and a circulation pump (3).

5. A heat exchanger according to any one of the preceding claims wherein the heat exchange section (6) is composed of a plurality of radiators connected together in series to the or a circulation duct including the heating section and there is provided an auxiliary heating means (11) between the radiators so as to heat additionally the heat carrying liquid (1) which has been cooled by radiation.

6. A heat exchanger according to any one of the preceding claims wherein a preheater (14) is provided to keep the heat carrying liquid at approximately a suitable viscosity for circulation.

7. A heat exchanger according to any one of the preceding claims wherein the heat required is supplied from either electric heat or solar heat or both.

8.     A heat exchanger according to any one of the preceding claims wherein the heat required is supplied by an inductive heating means.

9.     A heat exchanger according to any one of the preceding claims wherein the heat exchange section (6) consists of a case (40) of adiabatic structure and a heat exchanging pipe (43) penetrating the case,

10.     A heat exchanger according to any one of claims 1 to 8 wherein the heat exchange section (6) is a dual-structured vessel constructed by putting together two containers (71,72) each having a mouth opening upward with a space (74) between the containers (71,72) and the spece (74) is filled with the heat carrying liquid (1).

# FIG.1

# FIG.2

# FIG.3

# FIG.4

# FIG.5

# FIG.6

# FIG.7

# FIG.8

# FIG.9

# FIG.10

70

71  73

72  74  1  75

# FIG.11

70  71

76

72

76

# FIG.12

79  77

78

71  72

81  80

FIG.13

95        95

90                91

94

93

92

FIG.14

90

94        92

91

93

95

92